# EUROPÄISCHE PATENTSCHRIFT

(11) **EP 0 972 331 B1**
(45) Veröffentlichungstag und Bekanntmachung des Hinweises auf die Patenterteilung: **16.08.2001**
(21) Anmeldenummer: 98917068.3
(22) Anmeldetag: 25.03.1998
(51) Int. Cl.: H02K 21/12

(54) **EINSEITIGE TRANSVERSALFLUSSMASCHINE IN MEHRSTRÄNGIGER AUSFÜHRUNG**
UNILATERAL TRANSVERSE FLUX MACHINE WITH A MULTI-STRAND DESIGN
MACHINE A FLUX TRANSVERSAL UNILATERALE DANS UNE VARIANTE A PLUSIEURS BRINS

(30) Priorität: 03.04.1997 DE 19714895
(43) Veröffentlichungstag der Anmeldung: 19.01.2000
(73) Patentinhaber: DaimlerChrysler Rail Systems GmbH, 13627 Berlin (DE)
(72) Erfinder: SCHÄFER, Uwe, D-12047 Berlin (DE)
(74) Vertreter: Gmeiner, Christa, c/o DaimlerChrysler AG
(86) Internationale Anmeldenummer: EP9801724
(87) Internationale Veröffentlichungsnummer: WO9845927

(56) Entgegenhaltungen:
- DE-A- 3 602 687
- DE-A- 19 532 614
- DE-A- 19 614 862
- FR-A- 2 730 873

## Beschreibung

Die Erfindung bezieht sich auf eine mehrsträngige Transversalflußmaschine gemäß dem Oberbegriff des Anspruchs 1. Eine solche Transversalflußmaschine ist durch DE 36 02 687 A1 oder durch den Beitrag von M. Bork und G. Henneberger "New Transverse Flux Concept for an Electric Vehicle Drive System", ICEM 1996 bekannt.

Derartige Maschinen können mit sehr hoher Drehmomentdichte gebaut werden. Die Maschinen werden in Straßen- oder Schienenfahrzeugen vorzugsweise als in die Radnabe eingebaute Direkt-antriebe genutzt. Das Anwendungsspektrum reicht dabei vom Pkw mit Einzelradantrieb bis zu Lokomotiven und großen Nutzfahrzeugen. Weitere Anwendungsmöglichkeiten bestehen in stationären Direktantrieben mit hohem Bereich konstanter Leistung wie in Haspelantrieben und in Textilmaschinen.

Transversalflußmaschinen werden meistens als zweisträngige Maschinen ausgeführt, da sie eine Doppelstator-Anordnung aufweisen, die mehr als zwei Stränge fertigungstechnisch nicht realisieren lassen.

Bekannte Ausführungen von doppelseitigen Transversalflußmotoren z.B. gemäß DE 44 43 999 A1 oder DE 195 22 382 A1 bieten eine hohe Drehmomentdichte, sind jedoch nur aufwendig zu fertigen. Demgegenüber stehen einseitige auch mehrphasige Transversalflußmaschinen, die einfach zu fertigen sind, jedoch durch die hohe Läuferstreuung eine wesentlich geringere Drehmomentdichte aufweisen (DE 195 32 614 A1).

Durch die DE 36 02 687 A1 ist eine Transversalflußmaschine bekannt, bei der eine Kröpfung der Schenkel der U-förmigen Joche angedeutet ist, ohne daß über diese Maßnahme im Text etwas gesagt ist.

Durch die EP 0 243 425 ist es auch bekannt, bei einer geometisch ohnehin anders aufgebauten Transversalflußmaschine zwei U-förmige Ständerjoche nebeneinander gesetzt zu verbinden. Jede Hälfte des Mittelschenkels führt dabei ihren Fluß. Ein mögliches Einsparungspotential ist nicht angegeben

Bekannt ist die eingangs genannte, von Bork und Henneberger veröffentlichte Ausführung von Transversalflußmotoren mit einseitigem Stator und tangentialem Rückschluß im Rotor. Diese Lösung erlaubt ebenfalls die Ausführung mit mehr als zwei Strängen, da die einzelnen Stränge mit einem gewissen Abstand aneinanderreihbar sind.

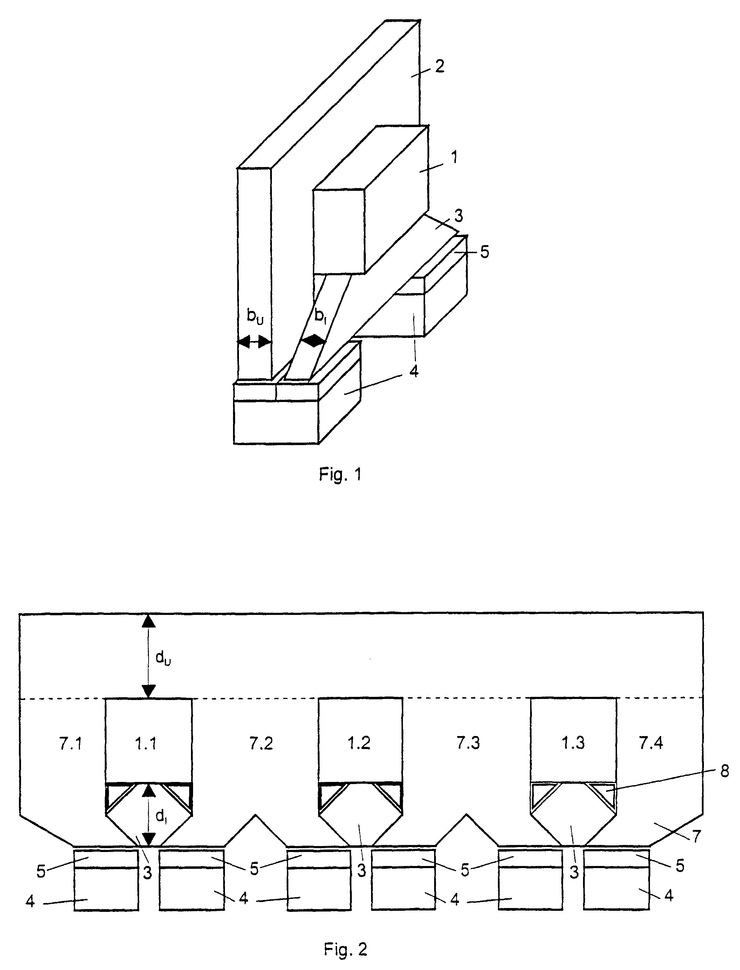

Fig. 1 zeigt demgemäß ein Polpaar einer mehrpoligen Anordnung. Die p Polpaare können in linearer Aufreihung als Linearmotor und im Falle einer ringförmigen Biegung der Wicklung als rotatorische Maschine ausgeführt werden. Im folgenden wird auf eine rotatorische Ausführung Bezug genommen.

Der aktive Teil des Ständers der Maschine besteht aus einer Ringwicklung 1 mit diese teilweise, umschließenden im wesentlichen U-förmigen weichmagnetischen Jochen 2 der Anzahl p und zwischen diesen angeordneten I-förmigen weichmagnetischen Jochen 3. Die U-förmigen Jochen 2 und die I-förmigen Joche 3 können unterschiedliche Breiten bᵤ und bₗ aufweisen, um den unterschiedlich hohen Fluß zu führen. Der aktive Teil des Läufers besteht pro Strang aus zwei ringförmigen Rotor-jochen 4 aus weichmagnetischem Material, auf denen jeweils 2p Permanentmagnete 5 in abwechselnder radialer Magnetisierung aufgebracht sind. Der Drehschub dieser Ausführung ist aufgrund der Streuwegsättigung begrenzt.

Der Erfindung liegt die Aufgabe zugrunde, eine einseitige Transversalflußmaschine der eingangs genannten Art anzugeben, bei der
- die Streuwege reduziert sind, so daß der Drehschub gesteigert wird,
- die Baulänge verringert wird und
- bei den Polen weichmagnetisches Material eingespart wird.

Diese Aufgabe wird gemäß der Erfindung durch das im Patentanspruch 1 gekennzeichnete Merkmal gelöst.

Vorteilhafterweise sind infolge der Kröpfung der Schenkel der U-förmigen Joche die Streuwege reduziert. Auch können dadurch die U-förmigen und die I-förmigen Joche ohne Lücke, d.h. ohne Gefahr eines Kurzschlusses an der Kröpfstelle unmittelbar benachbart angeordnet werden, was die Baulänge der Maschine reduziert. Schließlich wird durch die Mehrfachausnutzung der mittleren Schenkel der U-förmigen Joche Polmaterial eingespart.

Vorteilhafte Ausgestaltungen der Erfindung sind in den übrigen Ansprüchen gekennzeichnet.

Die Erfindung soll im folgenden anhand eines in der Fig. 2 der Zeichnung dargestellten Ausführungsbeispiels erläutert werden. Es zeigt exemplarisch eine dreisträngige Ausführungsform einer Transversalflußmaschine nach der Erfindung.

Eine vorteilhafte Ausführung der mehrsträngigen Transversalflußmaschine entsteht durch die Kombination mehrerer einsträngiger Ausführungen in axialer Richtung, die aber gemäß der Erfindung im Gegensatz zu bisher bekannten Anordnungen keinen Abstand zwischen den Strängen benötigt. Eine bevorzugte Strangzahl ist drei, jedoch sind auch höhere oder geringere Strangzahlen möglich.

Fig. 2 zeigt exemplarisch eine dreisträngige Ausführung in einem radialen Schnitt. Der Motor weist im Ständer drei Ringwicklungen 1.1, 1.2 und 1.3 auf, die von phasenverschobenen Strömen durchflossen werden. Die Ringwicklungen sind tangential zur Kraftwirkung angeordnet. Die Ringwicklungen 1.1 bis 1.3 werden von einer Reihe von im wesentlichen U-förmigen Jochen 7 teilweise umschlossen, die je Strang jeweils aufeinander zu gekröpft sind. Jedes Joch 7 weist in einer Ebene vier Schenkel 7.1 bis 7.4 auf, von denen die mittleren auf der dem Läufer zugewandten Seite geteilt sind. Die Schenkel haben einen gemeinsamen Rückschluß.

Die jeweils benachbarten Schenkel 7.2 und 7.3 der drei Stränge sind miteinander verbunden und werden von jeweils 2 Strängen gemeinsam für die Flußführung benutzt. Die mittleren Schenkel 7.2 und 7.3 der Ständer-Joche sind entsprechend dem sich durch die Überlagerung der Strang-Flüsse ergebenden magnetischen Gesamt-Fluß dünner ausgelegt als die Summe der Dicke der äußeren Schenkel 7.1 und 7.4.

Jedem Ständerjoch sind drei im wesentlichen I-förmige Joche 3 zugeordnet, die sich im Schnitt hinter dem Joch 7 befinden. Die Polhöhe dᵤ im nichtgekröpften Bereich der U-förmigen Joche 7.1 bis 7.4 ist im Bereich der Wicklung 1.1 bis 1.3 dicker ausgeführt als die Polhöhe dₗ der I-förmigen Joche 3. Auf dem Läufer sind Permanent-Magnete 5 in sechs den Schenkeln der Ständerjoche gegenüberliegenden Reihen angeordnet. Die Magnetreihen sind geometrisch entsprechend der elektrischen Phasenverschiebung der Stränge gegeneinander versetzt, so daß die Schenkel 7.1 bis 7.4 abhängig von der Läuferposition untereinander unterschiedlich magnetisiert werden: Jede Reihe von Permanent-Magneten besitzt einen läuferseitigen weichmagnetischen Rückschluß 4 in tangentialer Richtung.

Fig. 2 zeigt ebenfalls eine vorteilhafte Anordnung zur Flüssigkeits-Kühlung einer Transversalflußmaschine nach der Erfindung. Infolge der Kröpfung der U-förmigen Joche wird die Kühlflüssigkeit 8 dabei ringförmig parallel zur Wicklung 1.1 bis 1.3 geführt. Dadurch werden sowohl die Ringwicklung als auch die thermisch beanspruchten Bereiche der Ständer-Joche wirksam gekühlt. So wird es möglich, zumindest Teile der Trägerkonstruktion für den Ständer aus Isoliermaterial zu fertigen. Dies betrifft vor allem den Bereich hohen Streuflusses zwischen den U- und I-förmigen Jochen. Damit können Wirbelstromverluste, die in bekannten Ausführungen im metallischen Träger entstehen, erheblich reduziert werden.

## Patentansprüche

1. Mehrsträngige Transversalflußmaschine mit einseitigem Ständer und Läufer, bei der
- im elektrische Ringwicklungen tragenden Ständer im wesentlichen U-förmige, den Strängen zugeordnete Joche und im wesentlichen I-förmige Joche ebenfalls abwechselnd jeweils in einer Ebene hintereinander angeordnet sind,
- ein Läufer an seiner den Jochen benachbarten Oberfläche flächig befestigte Permanentmagnete trägt und einen ringförmigen Rückschluß aufweist
- die Permanentmagnete in Reihen mechanisch gegeneinander versetzt angeordnet sind und
- die Ringwicklungen von elektrisch entsprechend versetzten Strömen durchflossen werden,
**dadurch gekennzeichnet,**
**daß** die Schenkel (7.1. bis 7.4) der U-förmigen Joche eines jeden Stranges in jeder Ebene aufeinander zu gekröpft sind
**daß** die jeweils in einer Ebene angeordneten benachbarten Schenkel (7.2, 7.3) der Stränge miteinander verbunden sind,
**daß** mindestens Teile der verbundenen Schenkel (7.2, 7.3) von mehreren Strängen gemeinsam für die Flußführung genutzt werden und
**daß** die Dicke der verbundenen gemeinsam benutzten Schenkel (7.2, 7.3) entsprechend den Flußverhältnissen verringert ist.

2. Transversalflußmaschine nach Anspruch 1,
**dadurch gekennzeichnet,**
daß die Polhöhe (dᵤ) im nichtgekröpften Bereich der U-förmigen Joche (7.1 bis 7.4) mindestens im Bereich der Wicklung (1.1 bis 1.3) dicker ausgeführt ist als die Polhöhe (dᵢ) der I-förmigen Joche (3).

3. Transversalflußmaschine nach einem der Ansprüche 1 oder 2,
**dadurch gekennzeichnet**
daß die U-förmigen Joche (7.1 bis 7.4) und die I-förmigen Joche (3) in axialer Richtung geblecht ausgeführt sind.

4. Transversalflußmaschine nach Anspruch 3,
**dadurch gekennzeichnet,**
daß die Joche teilbar ausgeführt werden.

5. Transversalflußmaschine nach einem der Ansprüche 1 oder 2,
**dadurch gekennzeichnet,**
daß die U-förmigen Joche (7.1 bis 7.4) und die I-förmigen Joche (3) als Schnittbandkerne ausgeführt sind.

6. Ausbildung der Transversalflußmaschine nach einem der Ansprüche 1 bis 5, mit Innen- oder
Außenläufer oder als Linearmotor.

7. Transversalflußmaschine nach einem der Ansprüche 1 bis 6,
**gekennzeichnet durch**
eine im Wickelfenster der U-förmigen Joche (7.1 bis 7.4) angeordnete Kühlmittelführung, die im wesentlichen parallel zur Ringwicklung (1.1. bis 1.3) erfolgt und in engem thermischen Kontakt zu den Jochen (7.1 bis 7.4) und der Ringwicklung (1.1. bis 1.3) steht.

8. Transversalflußmaschine nach einem der Ansprüche 1 bis 7,
**dadurch gekennzeichnet,**
daß mindestens im Bereich hohen Streuflusses zwischen den U-förmigen Jochen (7.1 bis 7.4) und den I-förmigen Jochen (3) eine isolierende Trägerkonstruktion vorgesehen ist.

## Claims

1. Multi-phase transverse-flux machine with onesided stator and rotor, in which
- essentially U-shaped yokes assigned to the phases and essentially 1-shaped yokes are arranged alternately one behind the other, in each case in one plane, in the stator carrying electrical ring windings,
- a rotor carries, on its surface adjacent to the yokes, permanent magnets fastened over the area and a ring-shaped return,
- the permanent magnets are arranged in series, so as to be offset mechanically relative to one another, and
- currents correspondingly offset electrically flow through the ring windings,
characterized
in that the limbs (7.1 to 7.4) of the U-shaped yokes of each phase are bent towards one another in each plane,
in that those adjacent limbs (7.2, 7.3) of the phases which are arranged in each case in one plane are connected to one another,
in that at least parts of the connected limbs (7.2, 7.3) of a plurality of phases are jointly used for flux guidance, and
in that the thickness of the connected jointly used limbs (7.2, 7.3) is reduced according to the flux conditions.

2. Transverse-flux machine according to Claim 1,
characterized in that the pole height (dᵤ) in the nonbent region of the U-shaped yokes (7.1 to 7.4) is made thicker, at least in the region of the winding (1.1 to 1.3), than the pole height (d₁) of the 1-shaped yokes (3).

3. Transverse-flux machine according to one of Claims 1 or 2, characterized in that the U-shaped yokes (7.1 to 7.4) and the 1-shaped yokes (3) are designed so as to be laminated in the axial direction.

4. Transverse-flux machine according to Claim 3,
characterized in that the yokes are designed so as to be dividable.

5. Transverse-flux machine according to one of Claims 1 or 2, characterized in that the U-shaped yokes (7.1 to 7.4) and the 1-shaped yokes (3) are designed as split tape-wound cores.

6. Design of the transverse-flux machine according to one of Claims 1 to 5 with an internal or external rotor or as a linear rotor.

7. Transverse-flux machine according to one of Claims 1 to 6, characterized by a coolant ducting which is arranged in the winding aperture of the U-shaped yokes (7.1 to 7.4) and which is essentially parallel to the ring winding (1.1 to 1.3) and is in close thermal contact with the yokes (7.1 to 7.4) and with the ring winding (1.1 to 1.3).

8. Transverse-flux machine according to one of Claims 1 to 7, characterized in that an insulating carrier structure is provided at least in the region of high leakage flux between the U-shaped yokes (7.1 to 7.4) and the 1-shaped yokes (3).

## Revendications

1. Machine à flux transversal à plusieurs brins comprenant un stator et un rotor à situation unilatérale, dans laquelle
- des armatures essentiellement en forme de U, associées aux brins, et des armatures essentiellement en forme de I, sont disposées en alternance à chaque fois dans un même plan les unes derrière les autres dans le stator portant des enroulements annulaires électriques,
- un rotor porte, sur sa surface voisine des armatures, des aimants permanents fixés en nappe et présente un court-circuit magnétique annulaire,
- les aimants permanents sont disposés en rangées de façon décalée mécaniquement les uns contre les autres et
- les enroulements annulaires sont parcourus par des courants décalés électriquement de manière correspondante,
caractérisée en ce que les branches (7.1 à 7.4) des armatures en forme de U de l'un des brins sont coudées dans chaque plan l'une vers l'autre, en ce que les branches voisines (7.2, 7.3) des brins disposées à chaque fois dans un même plan sont raccordées entre elles, en ce qu'au moins des parties des branches raccordées (7.2, 7.3) de plusieurs brins sont utilisées conjointement pour le guidage du flux et en ce que l'épaisseur des branches raccordées utilisées conjointement (7.2, 7.3) est réduite en fonction des conditions de flux.

2. Machine à flux transversal selon la revendication 1, caractérisée en ce que la hauteur de pôle (dᵤ) dans la région non coudée des armatures en forme de U (7.1 à 7.4) est réalisée, au moins dans la région de l'enroulement (1.1 à 1.3), de manière plus épaisse que la hauteur de pôle (dᵢ) des armatures en forme de I (3).

3. Machine à flux transversal selon l'une quelconque des revendications 1 ou 2, caractérisée en ce que les armatures en forme de U (7.1 à 7.4) et les armatures en forme de I (3) sont réalisées par empilage de tôles dans la direction axiale.

4. Machine à flux transversal selon la revendication 3, caractérisée en ce que les armatures sont réalisées de manière divisible.

5. Machine à flux transversal selon l'une quelconque des revendications 1 ou 2, caractérisée en ce que les armatures en forme de U (7.1 à 7.4) et les armatures en forme de I (3) sont réalisées sous la forme de tores enroulés.

6. Configuration de la machine à flux transversal selon l'une quelconque des revendications 1 à 5, comprenant un rotor interne ou externe, ou en tant que moteur linéaire.

7. Machine à flux transversal selon l'une quelconque des revendications 1 à 6, caractérisée par un guidage de réfrigérant disposé dans la fenêtre d'enroulement des armatures en forme de U (7.1 à 7.4), qui s'effectue essentiellement parallèlement à l'enroulement annulaire (1.1 à 1.3) et se trouve en contact thermique intime avec les armatures (7.1 à 7.4) et l'enroulement annulaire (1.1 à 1.3).

8. Machine à flux transversal selon l'une quelconque des revendications 1 à 7, caractérisée en ce qu'au moins dans la région de fort flux de dispersion entre les armatures en forme de U (7.1 à 7.4) et les armatures en forme de I (3), on prévoit une construction porteuse isolante.
